# EUROPEAN PATENT SPECIFICATION

(11) **EP 4 065 296 B1**
(45) Date of publication and mention of the grant of the patent: **02.07.2025**
(21) Application number: 20891842.5
(22) Date of filing: 26.11.2020
(51) Int. Cl.: B21D 22/20, B21D 37/16, C21D 1/26, B21D 37/08, C21D 1/673, C21D 8/00, C21D 9/00, B21D 35/00, B21D 22/02, C21D 1/42, C21D 11/00

(54) **HOT STAMP TOOLING ASSEMBLY AND METHOD OF FORMING A PART WITH TAILORED TEMPER PROPERTIES**
HEISSPRÄGEWERKZEUGANORDNUNG UND VERFAHREN ZUR HERSTELLUNG EINES TEILS MIT MASSGESCHNEIDERTEN HÄRTEEIGENSCHAFTEN
ENSEMBLE D'OUTILLAGE D'ESTAMPAGE À CHAUD ET PROCÉDÉ DE FORMATION D'UNE PIÈCE PRÉSENTANT DES PROPRIÉTÉS DE TREMPE ADAPTÉES

(30) Priority: 26.11.2019 US 201962940809 P
(43) Date of publication of application: 05.10.2022
(73) Proprietor: MAGNA INTERNATIONAL INC, Aurora, Ontario L4G 7K1 (CA)
(72) Inventor: KAUFHOLD, Stephan, 37308 Heilbad Heiligenstadt (DE); LERCH, Joerg, 37359 Küllstedt (DE)
(74) Representative: Grünecker Patent- und Rechtsanwälte PartG mbB
(86) International application number: PCT/CA2020/051615
(87) International publication number: WO 2021/102573

(56) References cited:
- EP-A1- 2 993 241
- EP-A2- 3 037 186
- DE-A1- 102018 124 425
- DE-A1- 102018 206 343
- DE-B4- 102011 011 013
- KR-A- 20110 075 732
- KR-B1- 101 164 323
- KR-B1- 101 450 386
- US-A1- 2016 059 295
- US-A1- 2018 050 378
- US-A1- 2019 193 134
- US-B2- 10 493 514
- US-B2- 8 733 144
- GEORGE R.; BARDELCIK A.; WORSWICK M.J.: "Hot forming of boron steels using heated and cooled tooling for tailored properties", JOURNAL OF MATERIALS PROCESSING TECHNOLOGY, vol. 212, no. 11, 1 November 2012 (2012-11-01), pages 2386 - 2399, XP028935930, ISSN: 0924-0136, DOI: 10.1016/j.jmatprotec.2012.06.028
- LINUS LARSSON: "Warm Sheet Metal Forming with Localized In-Tool Induction Heating", 31 October 2005 (2005-10-31), pages 1 - 85, XP002728418, Retrieved from the Internet <URL:https://portal.research.lu.se/portal/files/6325868/2261372.pdf> [retrieved on 20210126]

## Description

### BACKGROUND OF THE INVENTION

### 1. Field of the Invention

The present invention relates a hot stamp tool assembly and a method of forming a part with tailored temper properties. More particularly, the present invention relates to a hot stamp tool assembly and a method for forming parts with small transition zones between temper locations.

### 2. Related Art

This section provides background information related to the present disclosure which is not necessarily prior art.

Continuing efforts to reduce weight and increase fuel efficiency have driven the automotive industry to develop metal with improved strength and ductility allowing the use of thinner gauges while still maintaining industrial safety standards. During production, these metals often start as metal blanks that are later stamped in to automotive parts. Depending on an end use, automotive parts require different levels of strength and ductility. For example, a part stamped for use in automobiles may be subjected to one type of stresses via rough driving surfaces, internal vibrations, and exposure to corrosive environments whereas a neighboring part may only be subjected to minimal stresses. Moreover, individual parts may be subjected to inconsistent stresses in localized areas. Because certain parts experience less hardship, they can be produced with lighter metals and metal alloys to satisfy specific strength or stiffness requirements. However, for those parts that are subjected the most stress, they are usually made of steel or steel alloy that is treated for optimized strength and ductility. These treatment methods typically involve some way of heating the part to temperatures at which the physical and sometimes chemical property of the underlying metal is changed. Depending on the constituents of the metal alloy used, when a part is heated to a certain temperature, the constituents can form an uninterrupted microstructure before being cooled. While these treated parts can be made at thinner gauges to reduce weight, treated parts have become so hard that they are difficult to shape and connect to other neighboring parts. In addition, oftentimes it is beneficial to develop a part with a localized area that is softer with increased ductility to improve absorption during an impact event.

Attempts to produce parts with improved workability having localized areas with different levels of ductility and strength have resulted in the development of several processes in which localized areas of a part can be treated. One popular method involves heating a die between the stamping of metal parts. During this process, the die is heated to a temperature high enough to change the physical characteristics of the metal being stamped. However, it is hard to accurately heat treat a small or complex-shaped localized area without excess heat creeping into nearby portions. Moreover, the localized areas that are heat treated have large transition zones between a tempered location and a non-tempered location. Further relevant prior art is described in US 2019/193134, EP 2 993 241 A1, KR 2001 0075732 A, DE 10 2018 124425 A1, EP 3 037 186 A2.

Accordingly, there is a continuing desire to further develop and refine tempering processes to limit the size of transition zones.

### SUMMARY OF THE INVENTION

The foregoing has outlined rather broadly the features and technical advantages of the present invention in order that the detailed description of the invention that follows may be better understood. Additional features and advantages of the invention will be described hereinafter that form the subject of the claims of the invention. It should be appreciated by those skilled in the art that the conception and the specific embodiments disclosed may be readily utilized as a basis for modifying or designing other embodiments for carrying out the same purposes of the present invention. It should also be realized by those skilled in the art that such equivalent embodiments do not depart from the spirit and scope of the invention as set forth in the appended claims. This section provides a general summary of the disclosure and is not to be interpreted as a complete and comprehensive listing of all of the objects, aspects, features and advantages associated with the present disclosure. In order to solve the aforementioned problem, a hot stamping tool assembly, having the features defined in claim 1, is provided. Further, a method of forming a part with tailor tempered properties and small transition zones, having the features defined in claim 13 is provided. Further preferred embodiments are defined in the dependent claims.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and are not intended to limit the scope of the present disclosure. The inventive concepts associated with the present disclosure will be more readily understood by reference to the following description in combination with the accompanying drawings wherein:
Figure 1 is a top view of a hot stamp tool assembly having a first transfer arm for placing parts into the hot stamp tool and a second transfer arm for removing parts from the hot stamp tool;
Figure 2 is a cross-sectional side view of a hot forming die located within the hot stamp tool assembly;
Figure 3A is a cross-sectional side view of an annealing die located within the hot stamp tool assembly;
Figure 3B is an enlarged cross-sectional side view of the annealing die presented in Figure 3A;
Figure 4 generally illustrates a block diagram of a controlling system of the hot stamp tool assembly;
Figure 5 is a series of top views of the hot stamp tool illustrating a process of forming a part with tailored temper properties with small transition zones;
Figure 6A is an enlarged top view of the hot stamp tool assembly in a first step of the process shown in Figure 4;
Figure 6B is an enlarged top view of the hot stamp tool assembly in a second step of the process shown in Figure 4;
Figure 6C is an enlarged top view of the hot stamp tool assembly in a third step of the process shown in Figure 4;
Figure 6D is an enlarged top view of the hot stamp tool assembly in a fourth step of the process shown in Figure 4;
Figure 6E is an enlarged top view of the hot stamp tool assembly in a fifth step of the process shown in Figure 4;
Figure 6F is an enlarged top view of the hot stamp tool assembly in a sixth step of the process shown in Figure 4;
Figure 7 is a series of cross-sectional views of a part undergoing the process of forming tailored temper properties with small transition zones;
Figure 8 is a top view of a part with tailored temper properties and small transition zones; and
Figure 9 is a flow chart of a method for forming a part with tailored temper properties.

### DESCRIPTION OF THE ENABLING EMBODIMENT

Example embodiments will now be described more fully with reference to the accompanying drawings. In general, the subject embodiments are directed to a hot stamp tool assembly and a method of forming a part with tailored temper properties. However, the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

Referring to the Figures, wherein like numerals indicate corresponding parts throughout the views, the hot stamp tool assembly and method of same ultimately provide a part with temper locations and non-temper locations and small transition zones between temper locations and non-temper locations.

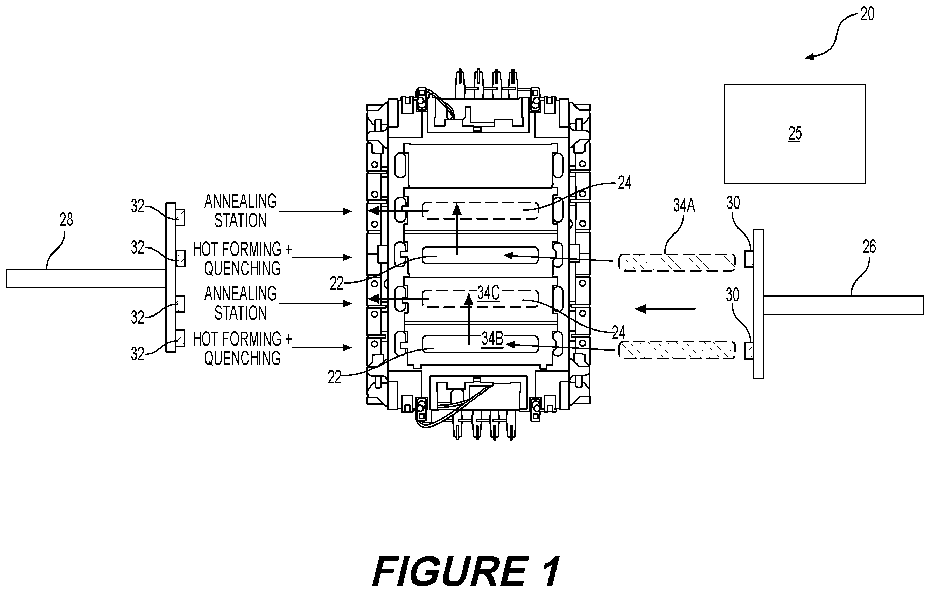

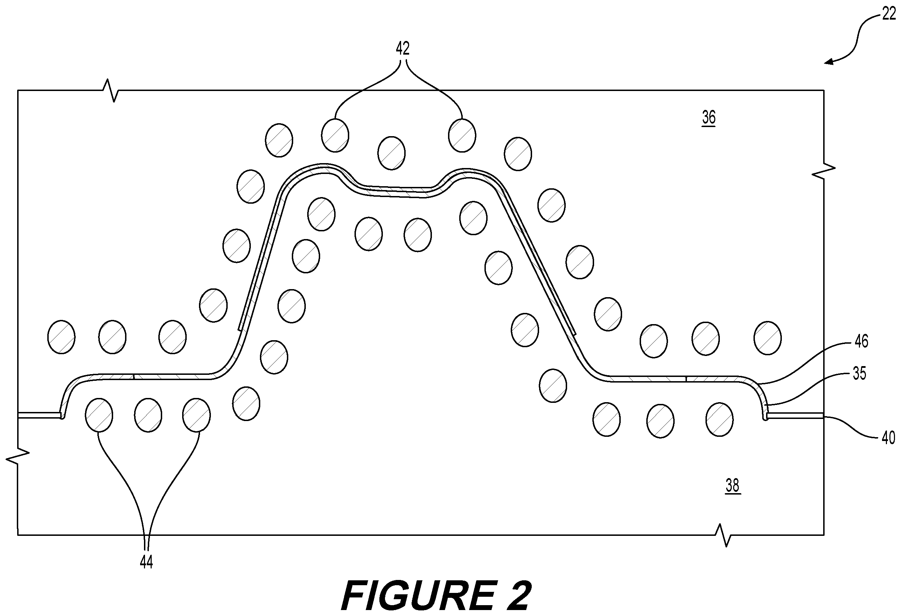

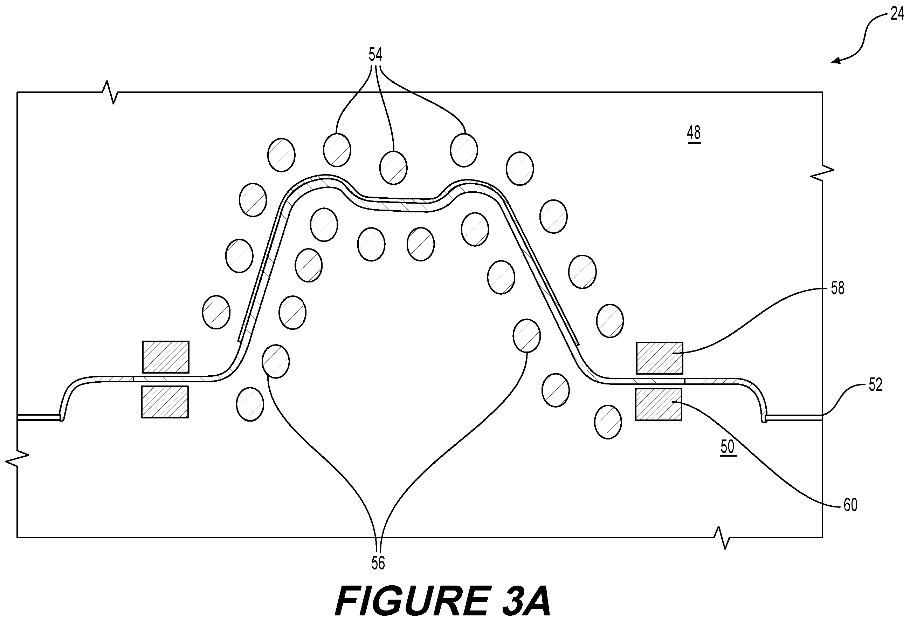

Referring initially to Figure 1, the hot stamp tool assembly 20 is generally shown. The hot stamp tool assembly 20 may include at least one hot forming die 22 (see Figure 2) and at least one annealing die 24 (Figure 3A). In some embodiments, the hot stamp tool assembly 20 includes a plurality of annealing dies 24, for example, a first annealing die and second annealing die 24 and a plurality of hot forming dies 22, for example, a first hot forming die and a second hot forming die 22. A first transfer arm 26 is located on one side of the hot stamp tool assembly 20 and a second transfer arm 28 is located on an opposite side of the hot stamp tool assembly 20. The first transfer arm 26 includes at least one blank holder 30, such as a hydraulically operated clamp, an energized magnet, a suction device, or any other implements conventionally utilized for moving blanks between locations. In some embodiments, the at least one blank holder 30 may include a first blank holder and a second blank holder 30. The second transfer arm 28 includes at least one shaped part holder 32, such as a hydraulically operated clamp, an energized magnet, a suction device, or any other implements conventionally utilized for moving shaped blanks between locations. In some embodiments, the at least one shaped part holder 32 may include a first shaped part holder, a second first shaped part holder, a third shaped part holder, and a fourth shaped part holder 32.

As illustrated by the arrows, the first transfer arm 26 connects to a pair of heated blanks 34A and removes them from a furnace 25 with a respective one of the first blank holders 30 and simultaneously places one heated blank 34A in the first hot forming die 22 and the other heated blank 34A in the second hot forming die 22. Once the heated blanks 34A have been placed into the hot forming dies 22, a stroke of the hot forming dies 22 stamps each of the blanks 34A into a shaped part 34B. While located in the hot forming dies 22, the blanks may also be quenched. The combination of heating and rapidly cooling may change a microstructure of at least a portion of the shaped parts 34B. For example, the heating and quenching may result in the formation of martensitic in at least a portion of the shaped parts 34B. After shaped and quenched, the second transfer arm 28 removes the shaped parts 34B with two of the shaped part holders 32 and places one shaped part 34B in the first annealing die 24 and the other shaped part 34B in the second annealing die 24. The shaped parts 34B then undergo an annealing process. For example, portions of the shaped parts 34 may be reheated to above a recrystallization temperature and then slowly cooled until they are annealed, thus becoming annealed parts 34C. While the shaped part 34B is located in the annealing die 24, it may further be subjected to additional cooling on portions of the shaped part 34B adjacent to those portions of the shaped part 34B that are annealed. The second transfer arm 28 removes the annealed parts 34C with two of the other shaped part holders 32 that were not used in placing the shaped parts 34B into the annealing die 24. In operation, the second transfer arm 28 may thus simultaneously connect to two or more shaped parts 34B and two or more annealed parts 34C with each of the shaped part holders 32 and move the shaped parts 34B between the forming dies 22 and the annealing dies 24 while removing the annealed parts 34C from the annealing dies 24 in one process step.

Figure 2 is a cross-sectional side view of one of the hot forming dies 22 located within the hot stamp tool assembly 20. Each of the hot forming dies 22 may include the same configuration and operational parameters. The hot forming die 22 includes a upper forming die 36 and a lower forming die 38 defining a forming cavity 40 therebetween. Inner surfaces of the upper forming die 36 and the lower forming die 38 may include topographical features to form the shaped part 34B into any number of shapes, including automotive components such as automotive pillars. The upper forming die 36 includes a series of upper forming die channels 42 located adjacent to the forming cavity 40 and the lower forming die 38 includes a series of lower forming die channels 44 located adjacent to the forming cavity 40. The upper forming die channels 42 and the lower forming die channels 44 thus provide quenching of the shaped part 34B with liquid coolant that is circulated therein or static cooling devices that are located therein. In some embodiments, the quenching process in the hot forming dies 22 may thus circulate coolant and change the microstructure in at least a portion of the shaped part 34B (e.g., forming martensite). In some embodiments, the shaped part 34B is cooled at a rate of at least 27°C per second and martensite may be formed between 200°C and 400°C. The upper forming die 36 and the lower forming die 38 may define a bend portion 46 of the cavity 40 that forms a stiffener flange 35 in the shaped part 34B. Cooling channels 42, 44 may be located adjacent to the entire outline wherein the shaped part 34B will be located, including the bend portion 46 such that primarily the entire shaped part is quenched. In some embodiments, the coolant in the forming die 22 may include a liquid, such as water, circulated at a temperature between 7°C and 38°C.

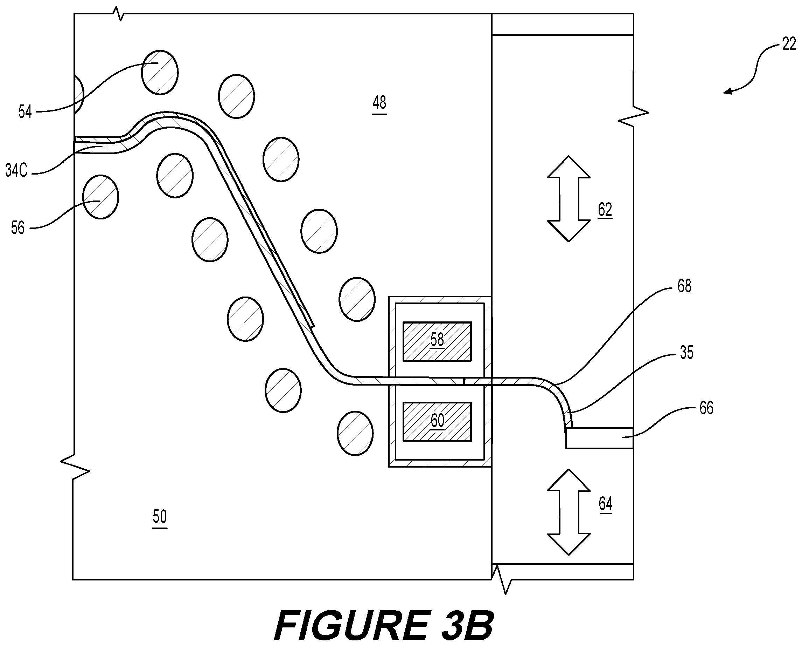

Figures 3A and 3B are cross-sectional side views of the annealing die 24 located within the hot stamp tool assembly 20. Each of the annealing dies 24 may include the same configuration and operational parameters. The annealing die 24 includes an upper annealing die 48 and an lower annealing die 50 defining an annealing cavity 52 therebetween. Inner surfaces of the upper annealing die 48 and an lower annealing die may include topographical features similar to that of the hot forming dies 22. The upper annealing die 48 includes a series of upper die channels 54 located adjacent to the annealing cavity 52 and the lower annealing die 50 includes a series of lower die channels 56 located adjacent to the annealing cavity 52. The upper die channels 54 and the lower die channels 56 may provide continued cooling of the shaped part 34B with coolant that is circulated therein or static cooling materials that are located therein. The cooling operation in the annealing die 24 may cause further reduce the temperature of portions of the shaped part 34B to between 0°C and 150°C. In some embodiments, the coolant in the annealing die 24 may include a liquid, such as water, circulated at a temperature between 20°C and 35°C. In some embodiments, the shaped part 34B is placed in the annealing die 24 once it reaches a temperature below 200°C.

The upper annealing die 48 may include at least one upper heating element, such as an upper induction coil 58 located adjacent to the annealing cavity 52 and the lower annealing die 50 may include at least one lower heating element, such as a lower induction coil 60, located adjacent to the annealing cavity 52. The at least one lower induction coil 58 may be disposed adjacent to and on an opposite side of the cavity 52 from the at least one upper induction coil 60. In some embodiments, the upper annealing die 48 includes two upper induction coils 58 located in a spaced relationship, wherein the series of upper die channels 54 are located between each of the upper induction coils 48. Similarly, the lower annealing die 50 may include two lower induction coils 60 located in a spaced relationship, wherein the series of lower die channels 56 are located between each of the lower induction coils 60. In some embodiments, the die channels 54, 56 are located on either side of the induction coils 58, 60. In some embodiments, the induction coils 58, 60 are located at a trim location of the shaped part 34B. In operation, the induction coils 58, 60 may rapidly heat and anneal the shaped part 34B at the trim location while the cooling channels 54, 56 maintain a lower temperature on locations of the shaped part 34B adjacent to the induction coils 58, 60, thus decreasing the creeping effect of the heat transfer and a reducing the size of a transition zone between the annealed portions of the shaped part 34B and the non-annealed portions of the shaped portion 34B.

As best illustrated in Figure 3B, the annealing die 24 may include a annealing die insert that includes an upper annealing die insert 62 and a lower annealing die insert 64 that can be moved independently of the upper annealing die 48 and the lower annealing die 50. The upper and lower annealing die inserts 62, 64 define an annealing insert cavity 66 with a bend 68 that accommodates the stiffener flange 35. Both annealing inserts 62, 64 are located on an outside portion of annealing die 24 from the induction coils 58, 60. As such, the quenched area is spaced from the stiffener flange 35 by a portion of the annealed part 34C which has been softened through annealing. The stiffener flange 35 can later be removed via cutting. No cooling channels may be necessary next to the stiffener flange 35 if it will be removed. However, the die channels 54, 56 opposite the stiffener flange 35 hinder the transition zone from creeping into portions other than the annealed portion and the stiffener flange 35. The stiffener flange 35 also prevents distortion of the annealed part 34C during the annealing process. However, in some embodiments it should be appreciated that the die channels 54, 56 may be located on opposite sides of the induction coils 58, 60. For example, it may be beneficial to allow the stiffener flange 35 to be quenched such that a trimming operation on the annealed portion is modified. In some embodiments, the trim portion and/or trimming operation may include deforming, piercing, cutting, etc. without departure from the subject disclosure. As such, when the die channels 54, 56 are located on opposite sides of the induction coils 58, 60, the annealed portion may be completely surrounded by the quenched portions. In some embodiments, the trim portion is inset from but outlines an entire or partial periphery of the annealed part 34C. In some embodiments, the upper and lower annealing die inserts 62, 64 may perform the trimming operation.

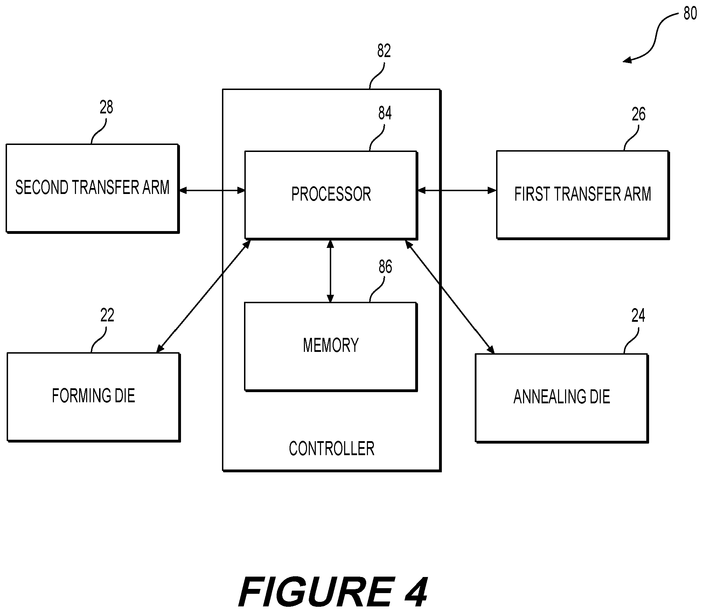

Figure 4 generally illustrates the control system 80 according to the principles of the present disclosure. The control system 80 may include a controller 82 and the controller 82 may include a processor 84 and a memory 86. The processor 84 may include any suitable processor, such as those described herein. Additionally, or alternatively, the controller 82 may include any suitable number of processors, in addition to or other than the processor 84. The memory 86 may comprise a single disk or a plurality of disks (e.g., hard drives), and includes a storage management module that manages one or more partitions within the memory 86. In some embodiments, memory 86 may include flash memory, semiconductor (solid state) memory or the like. The memory 86 may include Random Access Memory (RAM), a Read-Only Memory (ROM), or a combination thereof. The memory 86 may include instructions that, when executed by the processor 84, cause the processor 84 to, at least, perform the systems and methods described herein. The controller 82 may control operations of the forming die 22, the annealing die 24, the first transfer arm 26, the second transfer arm 28, and other features.

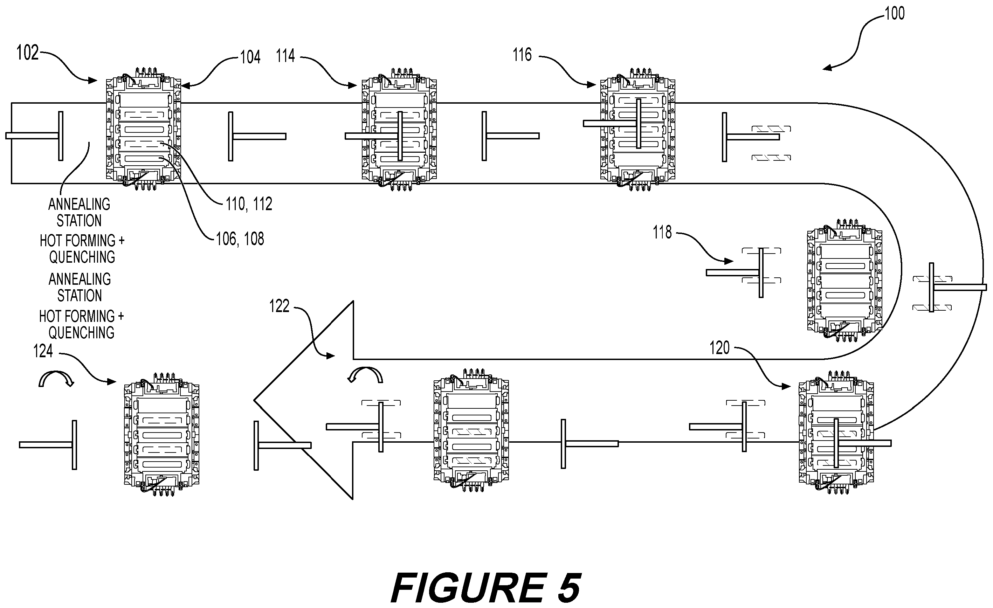

Figure 5 is a series of top views of the hot stamp tool illustrating sequential steps of a process 100 of forming tailored temper properties in a part with small transition zones. Each step in the process 100 may be carried out by instructions from the memory executed by the processor. Each of the hot stamp tools illustrated in Figure 5 is the same hot stamp tool as a function of time during the course of process 100. The process 100 begins with providing 102 a hot stamp tool having a pair of annealing dies and a pair of hot forming dies, wherein the hot forming dies each include a blank and the annealing dies each include a shaped part (which was previously a blank formed in one of the hot forming dies). During a stroke 104 of the hot stamp tool, the hot forming dies shape 106 the blanks into a shaped part and may further include a quenching 108 step, such as by a series of cooling channels, wherein a hardened microstructure may be formed within the shaped part. During the stroke 104, the annealing die simultaneously cools 110 and anneals 112 adjacent locations on the shaped part to form an annealed part. The step of annealing may include heating with an induction coil and the step of cooling may including cooling channels located adjacent to the induction coil. Next, the second transfer arm grabs 114 each of the shaped parts and each of the annealed parts and moves 116 the shaped parts to the annealing dies and moves 118 the annealed parts away from the hot stamp assembly. Once the shaped parts are moved 116, the first transfer arm moves 120 additional heated blanks into the hot forming dies. The heated blanks may be moved directly from a furnace. Next, the second transfer arm moves 122 the annealed parts into an area for additional processing (such as material deformation, trimming, piercing, or material removal of the annealed portion) and returns 124 into a position for step 114, wherein the process 100 repeats.

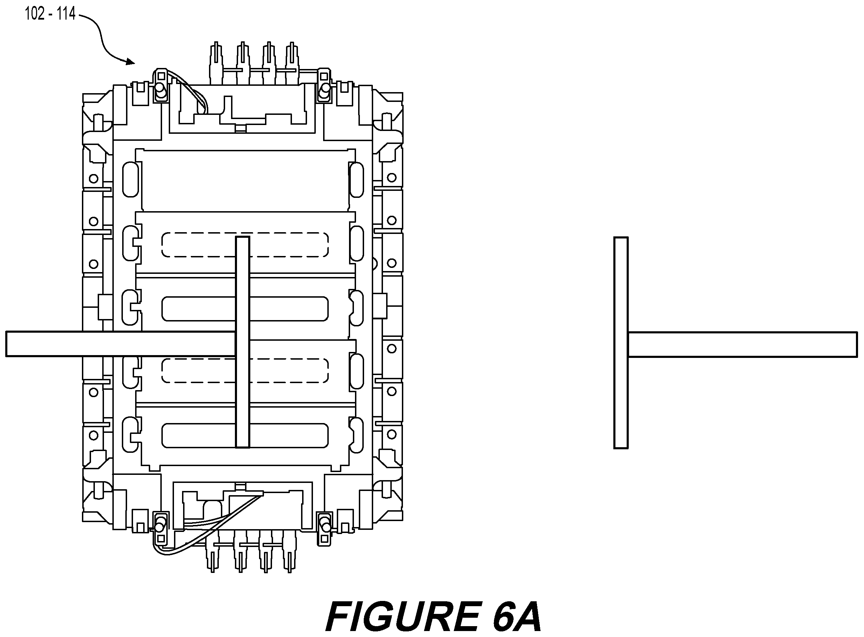

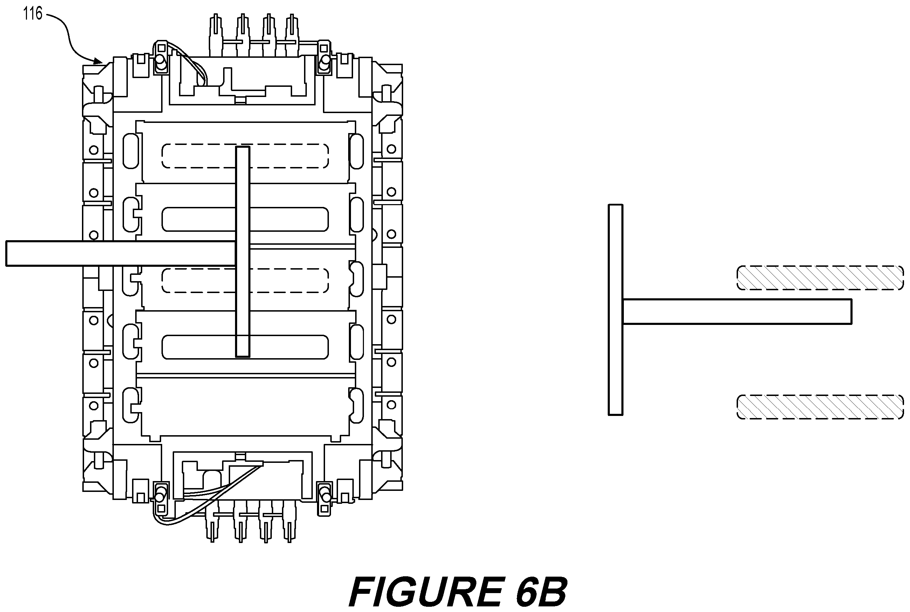

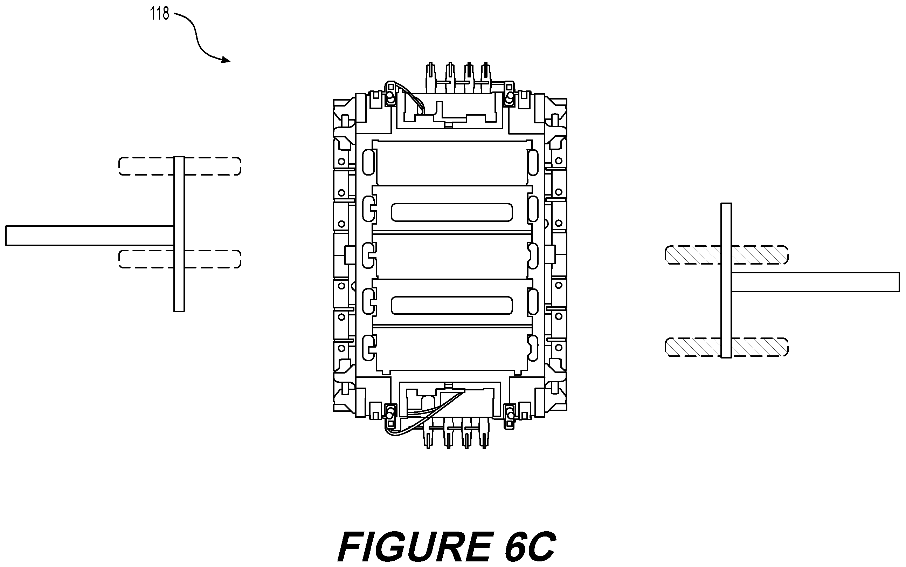

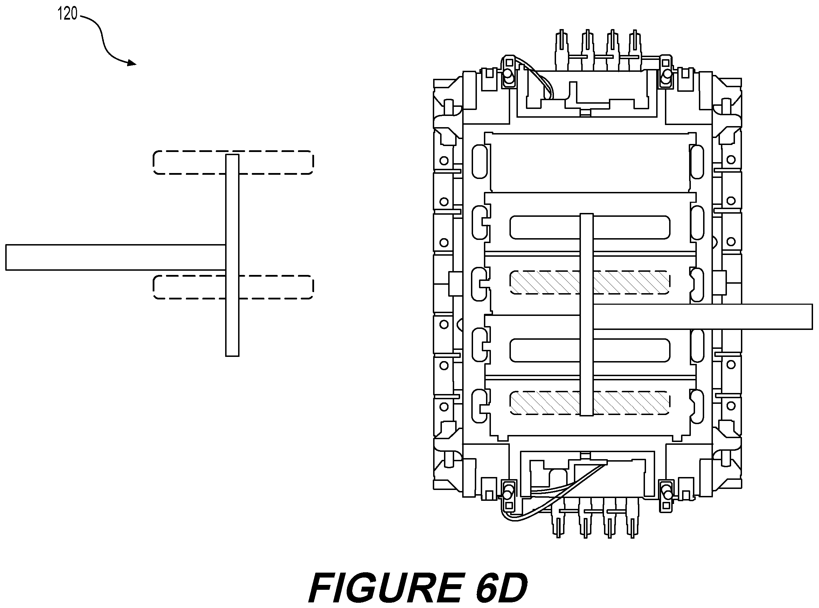

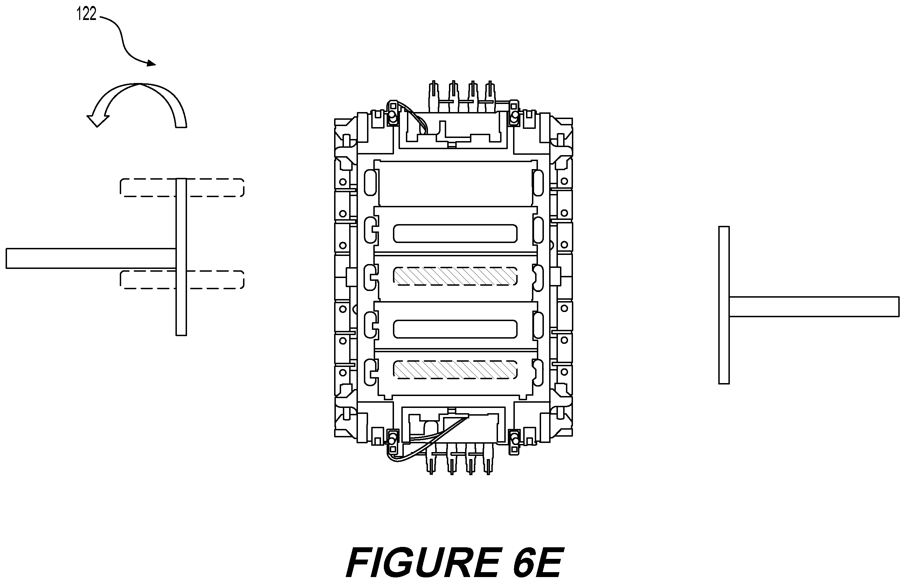

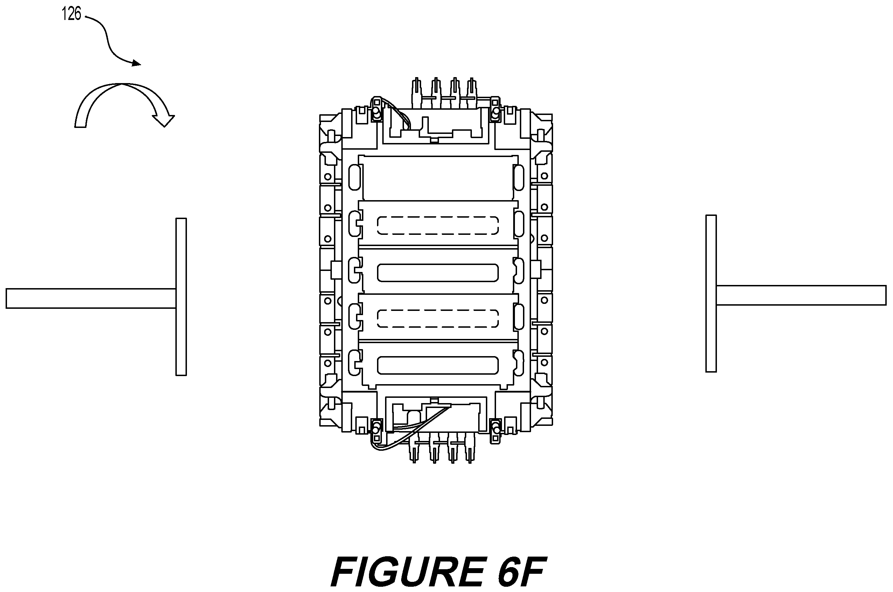

Figures 6A through 6F show enlarged steps 102 through 120 of the process 100. More particularly, Figure 6A illustrates providing 102 a hot stamp tool having a pair of annealing dies and a pair of hot forming dies, wherein the hot forming dies each include a blank and the annealing dies each include a shaped part (which was previously a blank formed in one of the hot forming dies). Figure 6B illustrates the second transfer arm grabbing 114 each of the shaped parts and each of the annealed parts and moving 116 the shaped parts to the annealing dies and moving 118 the annealed parts away from the hot stamp assembly. Figure 6C illustrates the first transfer arm moving 120 additional heated blanks towards the hot forming dies from a furnace and the second arm moving the annealed parts away from the hot stamp assembly. Figure 6D illustrates the first transfer arm moving 120 the additional heated blanks into the hot forming dies. Figure 6E illustrates the second transfer arm moving 122 the annealed parts into an area for additional processing. Figure 6F illustrates the second transfer arm returning 124 into a position for step 114, wherein the process 100 repeats.

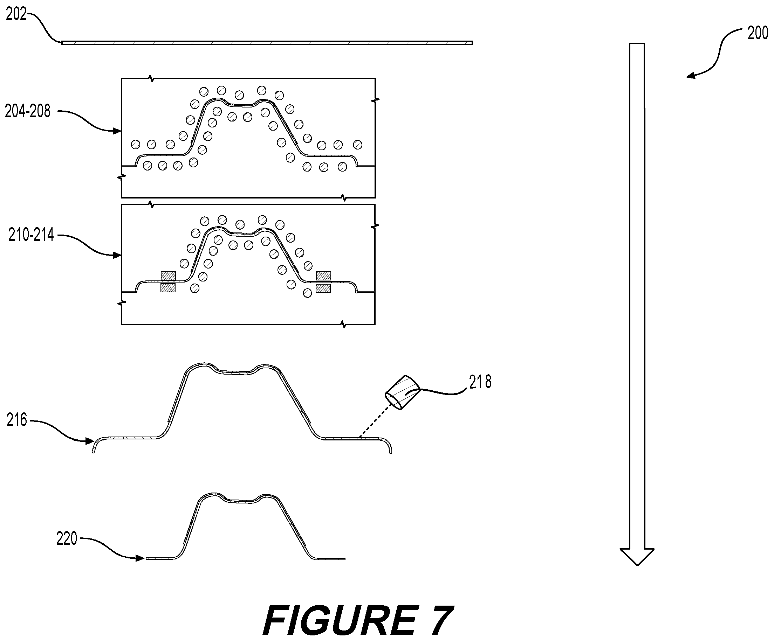

Figure 7 illustrates a series of cross-sectional views of a part undergoing a process 200 of forming tailored temper properties with small transition zones. Each step in the process 200 may be carried out by instructions from the memory executed by the processor. The process 200 presented in Figure 7 may be included with non-overlapping steps in process 100, for example, between steps 102 through 112. More particularly, the process begins by providing 202 a heated blank directly from a furnace. The heated blank is then placed 204 within a hot forming die, wherein it is shaped 206 and quenched 208 via cooling channels to from a shaped part with a hardened microstructure, e.g., higher levels of martensite. Next, the shaped part is placed 210 within an annealing die, wherein it continues to be cooled 212 via die channels and locally annealed 214 with induction coils that are adjacent to the die channels. The step of cooling may include cooling portions of the shaped part adjacent to the induction coils to a temperature between 0°C and 150°C. The portion of the shaped part that is cooled is entirely within the space between adjacent pairs of induction coils presented in Figure 3A and Figure 3B. The local annealing 214 step may include forming an annealed portion within or adjacent to a non-annealed portion, wherein a transition zone at least partially separates the annealed portion from the non-annealed portion and at least part, a majority, or substantially all the transition zone is less that 20mm, less than 15mm, approximately 10mm, or less than 10mm. Next, the part is moved 216 with the second transfer arm for later processing. The later processing includes deforming 218 the annealed portion. The step of deforming 218 may include one of cutting, riveting, bending, piercing, trimming to size, etc. The step of cutting may including laser cutting. The resulting part 220 may be a part of an automobile for example a pillar and more specifically a B-pillar.

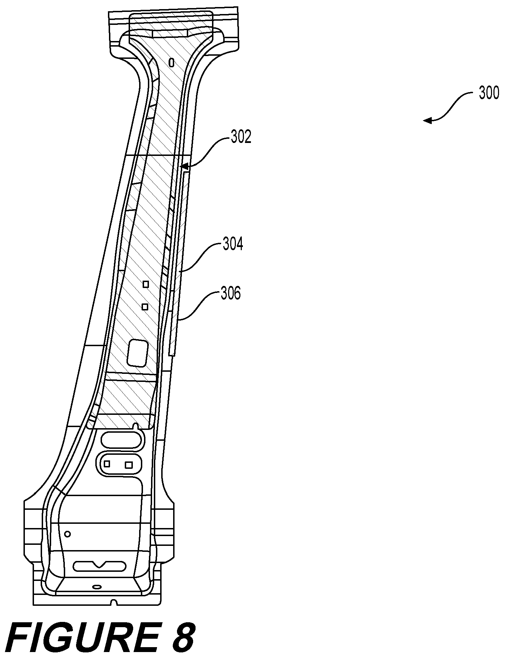

Figure 8 illustrates a part 300 having at least one non-annealed portion 302 with a small transition zone 304 that includes at least one deformation 306. More particularly, the part 300 is illustrated as a B-pillar with a transition zone 304 forming an outer edge that includes a deformation 306 including a cut along a peripheral edge of the transition zone 304.

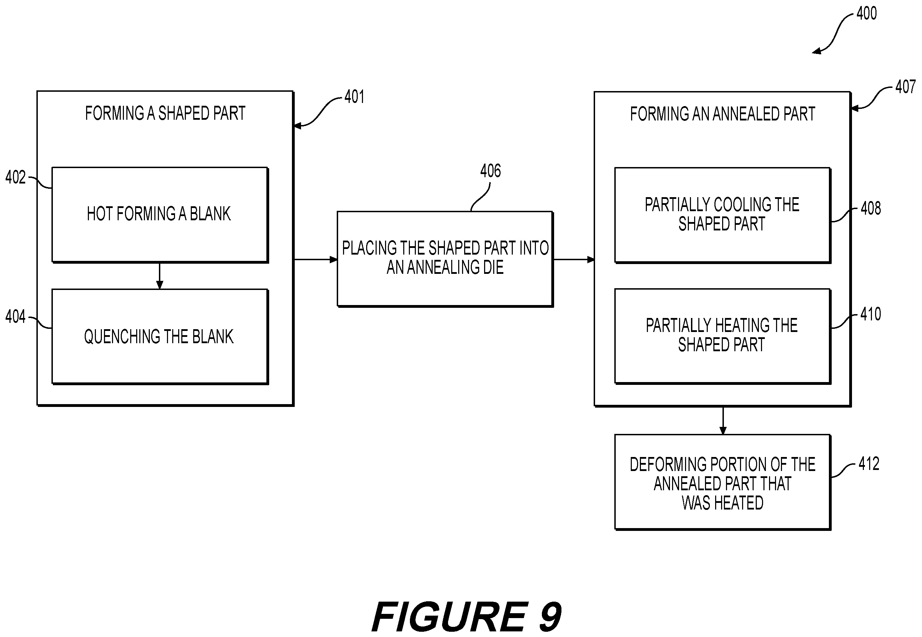

Figure 9 is a flowchart of a method 400 of forming a part with tailored temper properties and small transition zones. The method 400 begins by hot forming 402 and quenching 404 a blank in a hot forming die until it is a shaped part 401. The step of quenching 404 may include changing the microstructure of the shaped part. The method 400 continues by placing 406 the shaped part in an annealing die wherein it is partially cooled 408 and partially heated 410, simultaneously and at adjacent locations, until it is an annealed part 407 with a small transition zone between the annealed portions and the non-annealed portions. A portion of the annealed part that was heated 410 (i.e., an annealed portion of the annealed part) is then deformed 412.

It should be appreciated that the foregoing description of the embodiments has been provided for purposes of illustration. In other words, the subject disclosure it is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varies in many ways. Such variations are not to be regarded as a departure from the disclosure, and all such modifications are intended to be included within the scope of disclosure. The scope of protection however, is defined by the claims.

## Claims

1. A hot stamp tooling assembly (20) comprising:
at least one hot forming die (22) and at least one annealing die (24);
the at least one hot forming die (22) including an upper forming die (36) and a lower forming die (38) for shaping a blank into a shaped part;
the at least one annealing die (24) including an upper annealing die (48) and a lower annealing die (50) for receiving the shaped part;
the at least one annealing die (24) including at least one cooling element (56) and at least one heating element (58, 60), the cooling element located adjacent to the heating element; and
wherein the at least one heating element (58, 60) anneals a portion of the shaped blank and the at least one cooling element (56) simultaneously cools a portion of the shaped blank adjacent to the at least one heating element (58, 60) to hinder heat transfer from the at least one heating element (58, 60) to the cooled portion.

2. The hot stamp tooling assembly (20) of Claim 1, wherein the at least one heating element (58, 60) includes an upper induction coil located in the upper annealing die (48) and a lower induction coil located in the lower annealing die (50).

3. The hot stamp tooling assembly (20) of Claim 2, wherein the at least one cooling element (56) includes upper die channels located in the upper annealing die (48) adjacent to the upper induction coil and a lower die channel located in the lower annealing die (50) adjacent to the induction coil, wherein the upper die channels and the lower die channels transfer a coolant adjacent to the induction coils.

4. The hot stamp tooling assembly (20) of Claim 1, further including a first transfer arm (26) for placing at least one blank into the at least one hot forming die (22) and a second transfer arm (28) for removing the at least one blank once it has been shaped into a shaped part and placing the shaped part into the at least one annealing die (24).

5. The hot stamp tooling assembly (20) of Claim 4, wherein the at least one hot forming die (22) includes a first hot forming die and a second hot forming die and wherein the at least one annealing die (24) includes a first annealing die and a second annealing die.

6. The hot stamp tooling assembly (20) of Claim 5, wherein the first transfer arm (26) includes a first blank holder (30) and a second blank holder (30) for simultaneously placing a first blank into the first hot forming die and a second blank into the second hot forming die.

7. The hot stamp tooling assembly (20) of Claim 6, wherein the second transfer arm (28) includes a first shaped part holder (32) and a second shaped part holder (32) for removing the shaped part from the first hot forming die and the second hot forming die and placing them in the first annealing die and the second annealing die, and wherein the second transfer arm (28) includes a third holder (32) and a fourth holder (32) for removing a part from the first annealed die and the second annealed die simultaneously with the removal of the shaped part from the first hot forming die and the second hot forming die.

8. The hot stamp tooling assembly (20) of Claim 7, wherein the first hot forming die and the second hot forming die are spaced apart by the first annealing die and wherein the first annealing die and the second annealing die are spaced by the second hot forming die.

9. The hot stamp tooling assembly (20) of Claim 1, further including a control system comprising:
a processor (84);
a memory (86) that includes instructions that, when executed by the processor (84), cause the processor (84) to:
heat, with the at least one heating element (58, 60), at least one portion of the shaped part above a recrystallization temperature; and
cool, with the at least one cooling element (56), at least one portion of the shaped part adjacent to the at least one heated portion.

10. The hot stamp tooling assembly (20) of Claim 9, wherein the processor (84) is further caused to cool, with the at least one cooling element (56), the at least one portion of the shaped part adjacent to the at least one heated portion to a temperature between 0°C and 150°C.

11. The hot stamp tooling assembly (20) of Claim 9, wherein the at least one hot forming die (22) includes upper cooling channels in the upper forming die (36) and lower cooling channels in the lower forming die (38).

12. The hot stamp tooling assembly (20) of Claim 11, wherein the processor (84) is further caused to cool, with the upper cooling channels and the lower cooling channels, the shaped part to slow heat transfer from the at least one heating element (58, 60) to surrounding portions of the shaped part.

13. A method of forming a part with tailored temper properties and small transition zones comprising the steps of:
hot forming a blank in a hot forming die (22) until it is a shaped part;
placing the shaped part in an annealing die (24) and partially cooling and partially heating the shaped part in adjacent locations simultaneously to form at least one annealed portion and at least one non-annealed portions with a small transition zone therebetween; and
deforming the annealed portion.

14. The method of Claim 13, wherein the small transition zone is less than 20mm.

15. The method of Claim 13, further including partially cooling to a temperature between 0°C and 150°C and partially heating to a temperature at or above a recrystallization temperature.

## Patentansprüche

1. Heißprägewerkzeuganordnung (20) mit:
mindestens einer Warmformmatrize (22) und mindestens einer Glühmatrize (24);
wobei die mindestens eine Warmformmatrize (22) eine obere Formmatrize (36) und eine untere Formmatrize (38) zum Formen eines Rohlings zu einem Formteil umfasst;
wobei die mindestens eine Glühmatritze (24) eine obere Glühmatritze (48) und eine untere Glühmatritze (50) zum Aufnehmen des geformten Teils umfasst;
wobei die mindestens eine Glühmatritze (24) mindestens ein Kühlelement (56) und mindestens ein Heizelement (58, 60) umfasst, wobei das Kühlelement benachbart zu dem Heizelement angeordnet ist; und
wobei das mindestens eine Heizelement (58, 60) einen Teil des geformten Rohlings glüht und das mindestens eine Kühlelement (56) gleichzeitig einen Teil des geformten Rohlings benachbart zu dem mindestens einen Heizelement (58, 60) kühlt, um eine Wärmeübertragung von dem mindestens einen Heizelement (58, 60) zu dem gekühlten Teil zu verhindern.

2. Heißprägewerkzeuganordnung (20) nach Anspruch 1, wobei das mindestens eine Heizelement (58, 60) eine obere Induktionsspule, die in der oberen Glühmatrize (48) angeordnet ist, und eine untere Induktionsspule, die in der unteren Glühmatrize (50) angeordnet ist, umfasst.

3. Heißprägewerkzeuganordnung (20) nach Anspruch 2, wobei das mindestens eine Kühlelement (56) obere Matrizenkanäle umfasst, die in der oberen Glühmatrize (48) benachbart zur oberen Induktionsspule angeordnet sind, und einen unteren Matrizenkanal, der in der unteren Glühmatrize (50) benachbart zur Induktionsspule angeordnet ist, wobei die oberen Matrizenkanäle und die unteren Matrizenkanäle ein Kühlmittel benachbart zu den Induktionsspulen übertragen.

4. Heißprägewerkzeuganordnung (20) nach Anspruch 1, die ferner einen ersten Transferarm (26) zum Einlegen mindestens eines Rohlings in die mindestens eine Warmformmatrize (22) und einen zweiten Transferarm (28) zum Entnehmen des mindestens einen Rohlings, sobald er zu einem Formteil geformt worden ist, und zum Einlegen des Formteils in die mindestens eine Glühmatrize (24) umfasst.

5. Die Heißprägewerkzeuganordnung (20) nach Anspruch 4, wobei die mindestens eine Warmformmatrize (22) eine erste Warmformmatrize und eine zweite Warmformmatrize umfasst und wobei die mindestens eine Glühmatrize (24) eine erste Glühmatrize und eine zweite Glühmatrize umfasst.

6. Die Heißprägewerkzeuganordnung (20) nach Anspruch 5, wobei der erste Transferarm (26) einen ersten Rohteilhalter (30) und einen zweiten Rohteilhalter (30) zum gleichzeitigen Einlegen eines ersten Rohteils in die erste Heißform und eines zweiten Rohteils in die zweite Heißform umfasst.

7. Die Heißprägewerkzeuganordnung (20) nach Anspruch 6, wobei der zweite Transferarm (28) einen ersten Formteilhalter (32) und einen zweiten Formteilhalter (32) zum Entnehmen des Formteils aus der ersten Warmformmatrize und der zweiten Warmformmatrize und zum Einlegen in die erste Glühmatrize und die zweite Glühmatrize umfasst, und wobei der zweite Transferarm (28) einen dritten Halter (32) und einen vierten Halter (32) zum Entfernen eines Teils aus der ersten Glühmatrize und der zweiten Glühmatrize gleichzeitig mit dem Entfernen des Formteils aus der ersten Warmformmatrize und der zweiten Warmformmatrize umfasst.

8. Heißprägewerkzeuganordnung (20) nach Anspruch 7, wobei die erste Warmformmatrize und die zweite Warmformmatrize durch die erste Glühmatrize voneinander beabstandet sind und wobei die erste Glühmatrize und die zweite Glühmatrize durch die zweite Warmformmatrize voneinander beabstandet sind.

9. Heißprägewerkzeuganordnung (20) nach Anspruch 1, ferner mit einem Steuersystem, das umfasst:
einen Prozessor (84);
einen Speicher (86), der Befehle enthält, die, wenn sie vom Prozessor (84) ausgeführt werden, den Prozessor (84) veranlassen:
mit dem mindestens einen Heizelement (58, 60) mindestens einen Abschnitt des Formteils über eine Rekristallisationstemperatur zu erwärmen; und
mit dem mindestens einen Kühlelement (56) mindestens einen Abschnitt des Formteils, der an den mindestens einen erhitzten Abschnitt angrenzt, zu kühlen.

10. Die Heißprägewerkzeuganordnung (20) nach Anspruch 9, wobei der Prozessor (84) ferner veranlasst wird, mit dem mindestens einen Kühlelement (56) den mindestens einen Abschnitt des Formteils, der an den mindestens einen erwärmten Abschnitt angrenzt, auf eine Temperatur zwischen 0°C und 150°C zu kühlen.

11. Heißprägewerkzeuganordnung (20) nach Anspruch 9, wobei die mindestens eine Heißformmatrize (22) obere Kühlkanäle in der oberen Formmatrize (36) und untere Kühlkanäle in der unteren Formmatrize (38) umfasst.

12. Heißprägewerkzeuganordnung (20) nach Anspruch 11, wobei der Prozessor (84) ferner veranlasst wird, mit den oberen Kühlkanälen und den unteren Kühlkanälen das Formteil zu kühlen, um die Wärmeübertragung von dem mindestens einen Heizelement (58, 60) zu umgebenden Abschnitten des Formteils zu verlangsamen.

13. Verfahren zum Formen eines Teils mit maßgeschneiderten Temperierungseigenschaften und kleinen Übergangszonen, das die folgenden Schritte umfasst:
Warmformen eines Rohlings in einer Warmformmatrize (22), bis er ein Formteil ist;
Einlegen des Formteils in eine Glühmatrize (24) und gleichzeitiges teilweises Abkühlen und teilweises Erwärmen des Formteils an benachbarten Stellen, um mindestens einen geglühten Abschnitt und mindestens einen nicht geglühten Abschnitt mit einer kleinen Übergangszone dazwischen zu bilden; und
Verformen des geglühten Abschnitts.

14. Verfahren nach Anspruch 13, wobei die kleine Übergangszone weniger als 20 mm beträgt.

15. Verfahren nach Anspruch 13, das ferner das teilweise Abkühlen auf eine Temperatur zwischen 0°C und 150°C und das teilweise Erwärmen auf eine Temperatur bei oder über einer Rekristallisationstemperatur umfasst.

## Revendications

1. Ensemble d'outillage d'estampage à chaud (20) comprenant les éléments suivants :
au moins une filière de formage à chaud (22) et au moins une filière de recuit (24) ;
ladite au moins une matrice de formage à chaud (22) comprend une matrice de formage supérieure (36) et une matrice de formage inférieure (38) pour façonner une ébauche en une pièce formée ;
ladite au moins une filière de recuit (24) comprend une filière de recuit supérieure (48) et une filière de recuit inférieure (50) pour recevoir la pièce formée ;
ladite au moins une filière de recuit (24) comprend au moins un élément de refroidissement (56) et au moins un élément de chauffage (58, 60), l'élément de refroidissement étant situé à côté de l'élément de chauffage ; et
dans lequel ledit au moins un élément chauffant (58, 60) recuit une partie de l'ébauche formée et ledit au moins un élément de refroidissement (56) refroidit simultanément une partie de l'ébauche formée adjacente audit au moins un élément chauffant (58, 60) afin d'empêcher le transfert de chaleur dudit au moins un élément chauffant (58, 60) vers la partie refroidie.

2. Ensemble d'outillage d'estampage à chaud (20) selon la revendication 1, dans lequel ledit au moins un élément chauffant (58, 60) comprend une bobine d'induction supérieure située dans la matrice de recuit supérieure (48) et une bobine d'induction inférieure située dans la matrice de recuit inférieure (50).

3. Ensemble d'outillage d'estampage à chaud (20) selon la revendication 2, dans lequel ledit au moins un élément de refroidissement (56) comprend des canaux de matrice supérieurs situés dans la matrice de recuit supérieure (48) adjacente à la bobine d'induction supérieure et un canal de matrice inférieur situé dans la matrice de recuit inférieure (50) adjacente à la bobine d'induction, dans lequel les canaux de matrice supérieurs et les canaux de matrice inférieurs transfèrent un liquide de refroidissement adjacent aux bobines d'induction.

4. Ensemble d'outillage d'estampage à chaud (20) selon la revendication 1, comprenant en outre un premier bras de transfert (26) pour placer au moins une ébauche dans ladite au moins une matrice de formage à chaud (22) et un second bras de transfert (28) pour retirer ladite au moins une ébauche une fois qu'elle a été formée en une pièce de forme et placer la pièce de forme dans ladite au moins une matrice de recuit (24).

5. Ensemble d'outillage d'estampage à chaud (20) selon la revendication 4, dans lequel ladite au moins une matrice de formage à chaud (22) comprend une première matrice de formage à chaud et une seconde matrice de formage à chaud et dans lequel ladite au moins une matrice de recuit (24) comprend une première matrice de recuit et une seconde matrice de recuit.

6. Ensemble d'outillage d'estampage à chaud (20) selon la revendication 5, dans lequel le premier bras de transfert (26) comprend un premier support de découpe (30) et un second support de découpe (30) pour placer simultanément une première découpe dans la première matrice de formage à chaud et une seconde découpe dans la seconde matrice de formage à chaud.

7. Ensemble d'outillage d'estampage à chaud (20) selon la revendication 6, dans lequel le second bras de transfert (28) comprend un premier support de pièce formée (32) et un second support de pièce formée (32) pour retirer la pièce formée de la première matrice de formage à chaud et de la seconde matrice de formage à chaud et les placer dans la première matrice de recuit et la seconde matrice de recuit, et dans lequel le deuxième bras de transfert (28) comprend un troisième support (32) et un quatrième support (32) pour retirer une pièce de la première matrice de recuit et de la seconde matrice de recuit simultanément au retrait de la pièce formée de la première matrice de formage à chaud et de la deuxième matrice de formage à chaud.

8. Ensemble d'outillage d'estampage à chaud (20) selon la revendication 7, dans lequel la première matrice de formage à chaud et la seconde matrice de formage à chaud sont espacées par la première matrice de recuit et dans lequel la première matrice de recuit et la seconde matrice de recuit sont espacées par la seconde matrice de formage à chaud.

9. Ensemble d'outillage d'estampage à chaud (20) selon la revendication 1, comprenant en outre un système de commande comprenant :
un processeur (84) ;
une mémoire (86) qui comprend des instructions qui, lorsqu'elles sont exécutées par le processeur (84), conduisent le processeur (84) à :
chauffer, avec ledit au moins un élément chauffant (58, 60), au moins une partie de la pièce formée au-dessus d'une température de recristallisation ; et
refroidir, avec ledit au moins un élément de refroidissement (56), au moins une partie de la pièce formée adjacente à ladite au moins une partie chauffée.

10. Ensemble d'outillage d'estampage à chaud (20) selon la revendication 9, dans lequel le processeur (84) est en outre amené à refroidir, avec ledit au moins un élément de refroidissement (56), ladite au moins une partie de la pièce formée adjacente à ladite au moins une partie chauffée à une température comprise entre 0°C et 150°C.

11. Ensemble d'outillage d'estampage à chaud (20) selon la revendication 9, dans lequel ladite au moins une matrice de formage à chaud (22) comprend des canaux de refroidissement supérieurs dans la matrice de formage supérieure (36) et des canaux de refroidissement inférieurs dans la matrice de formage inférieure (38).

12. Ensemble d'outillage d'estampage à chaud (20) selon la revendication 11, dans lequel le processeur (84) est en outre amené à refroidir, avec les canaux de refroidissement supérieurs et les canaux de refroidissement inférieurs, la pièce formée pour ralentir le transfert de chaleur dudit au moins un élément chauffant (58, 60) vers les parties environnantes de la pièce formée.

13. Procédé de formage d'une pièce avec des propriétés de trempe adaptées et de petites zones de transition, comprenant les étapes suivantes :
le formage à chaud d'une ébauche dans une matrice de formage à chaud (22) jusqu'à ce qu'elle devienne une pièce formée ;
placer la pièce formée dans une filière de recuit (24) et refroidir partiellement et chauffer partiellement la pièce formée dans des endroits adjacents simultanément pour former au moins une partie recuite et au moins une partie non recuite avec une petite zone de transition entre les deux ; et
déformer la partie recuite.

14. Procédé selon la revendication 13, dans lequel la petite zone de transition est inférieure à 20 mm.

15. Procédé selon la revendication 13, comprenant en outre un refroidissement partiel à une température comprise entre 0°C et 150°C et un chauffage partiel à une température égale ou supérieure à une température de recristallisation.
